(19) Europäisches Patentamt / European Patent Office / Office européen des brevets

(11) **EP 4 336 618 A1**

(12) **EUROPEAN PATENT APPLICATION**
published in accordance with Art. 153(4) EPC

(43) Date of publication:
**13.03.2024 Bulletin 2024/11**

(21) Application number: **22940500.6**

(22) Date of filing: **29.07.2022**

(51) International Patent Classification (IPC):
**H01M 10/058** (2010.01) **H01M 4/13** (2010.01)

(86) International application number:
**PCT/CN2022/108863**

(87) International publication number:
**WO 2024/020992 (01.02.2024 Gazette 2024/05)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Contemporary Amperex Technology Co., Ltd.**
**Ningde, Fujian (CN)**

(72) Inventors:
• **LI, Chengfeng**
  **Ningde, Fujian 352100 (CN)**
• **YANG, Longfei**
  **Ningde, Fujian 352100 (CN)**
• **LIU, Xiaomei**
  **Ningde, Fujian 352100 (CN)**

(74) Representative: **Gong, Jinping**
**CocreateIP**
**Neumarkterstr. 21**
**81673 München (DE)**

(54) **SECONDARY BATTERY AND PREPARATION METHOD THEREFOR, AND ELECTRIC DEVICE**

(57)    Provided are a secondary battery and a preparation method thereof, and an electric device. The secondary battery includes a negative electrode plate and an electrolyte. The negative electrode plate includes a negative active material and a lithium supplement agent, and an insulating material is dissolved in the electrolyte. A mass ratio of the insulating material in the electrolyte ranges from 0.1% to 4%. The insulating material is derived from the negative electrode plate prior to injection the electrolyte, and the insulating material is arranged between the negative active material and the lithium supplement agent in the negative electrode plate prior to the injection the electrolyte.

4

**FIG. 1**

**Description**

**FIELD**

The present disclosure relates to the technical field of lithium batteries, and more particularly, to a secondary battery and a preparation method thereof, and an electric device.

**BACKGROUND**

Secondary batteries are widely used in various consumer electronics and electric vehicles due to their light weight, no pollution and no memory effect. During a first charging and discharging of the lithium ion battery, a solid electrolyte film may be formed on a surface of a negative electrode plate, and a part of the lithium ions transferred from a positive electrode are consumed, resulting in loss of lithium ions, thereby affecting capacity and service life of the lithium ion battery. Therefore, it is necessary to perform lithium supplement to improve the capacity of the lithium ion battery.

However, in the related lithium supplement technology, it is easy for a surface of the electrode plate supplemented with lithium to suffer blackening via nitriding and to generate heat, which reduces efficiency of the lithium supplement and brings potential safety hazards. Therefore, the traditional lithium supplement technology still needs to be improved.

**SUMMARY**

The present disclosure has been made in view of the above-mentioned problems, and an object thereof is to provide a secondary battery and a preparation method thereof, and an electric device, which can improve lithium supplement efficiency and lithium supplement safety while ensuring cycling performance of the secondary battery.

In order to achieve the object, a first aspect of the present disclosure is to provide a secondary battery. The secondary battery includes a negative electrode plate and an electrolyte. The negative electrode plate includes a negative active material and a lithium supplement agent. An insulating material is dissolved in the electrolyte. A mass ratio of the insulating material in the electrolyte ranges from 0.1% to 4%. The insulating material is derived from the negative electrode plate prior to injection of the electrolyte, and is arranged between the negative active material and the lithium supplement agent in the negative electrode plate prior to the injection of the electrolyte.

Thus, in the negative electrode plate of the secondary battery according to the embodiment of the present disclosure, by arranging the insulating material between the negative active material and the lithium supplement agent and arranging the insulating material between the negative active material and the lithium supplement agent prior to the injection of the electrolyte, it is possible to block an electron path between the lithium supplement agent and the negative active material, thereby slowing down corrosion reaction of the lithium supplement agent. Further, reaction of lithium supplement agent with moisture, oxygen, and nitrogen in the air is slowed down, heat generation caused by lithium side reaction in the process of lithium supplement is reduced, safety of the lithium supplement is improved, and efficiency of the lithium supplement is improved. Meanwhile, the skilled person has found that when the mass ratio of the insulating material in the electrolyte is within the above-mentioned range, not only the electron path of the lithium supplement agent and the negative active material can be blocked, but also viscosity and conductivity of the electrolyte are not affected after the injection of the electrolyte. Thus, with the above-mentioned secondary battery, it is possible to improve the lithium supplement efficiency and the lithium supplement safety while ensuring the cycling performance of the secondary battery.

After the injection of the electrolyte, the insulating material is dissolved, and the lithium supplement agent acts as an additional lithium source to generate self-discharge lithium insertion, and the introduction of the additional lithium source can increase the cycle life and energy density of the battery. The insulating material is dissolved after the injection of the electrolyte, and there is no insulating material at the interface, and thus the interface cannot be affected. Further, the insulating material does not need to have a gas barrier property, and can even be a gas-permeable soluble particle layer, which can still achieve a better effect.

In some embodiment of the present disclosure, the mass ratio of the insulating material in the electrolyte ranges from 2% to 4%, and optionally, the mass ratio of the insulating material in the electrolyte is 4%.

In some embodiment of the present disclosure, the insulating material has an electronic conductivity smaller than 10-6 S/m at a temperature of 25°C.

In some embodiment of the present disclosure, the insulating material satisfies at least one of the following conditions (1) to (3): (1) the insulating material has an ionic conductivity smaller than 10-3 S/m at a temperature of 25°C; (2) a solubility of the insulating material in the electrolyte is greater than 4 g at a temperature of -20°C; and (3) the insulating material is in a solid state at the temperature of 25°C.

In some embodiment of the present disclosure, the insulating material includes at least one of polymethyl methacrylate, a block copolymer of polymethyl methacrylate-propylene sulfite, polyethylene oxide, polyacrylonitrile, polystyrene, ethylene carbonate, propylene sulfate, ethylene sulfate, lithium bis(oxalate)borate, and lithium difluorophosphate.

In some embodiment of the present disclosure, the insulating material includes polymethyl methacrylate and ethylene carbonate, and optionally, a mass ratio of polymethyl methacrylate to ethylene carbonate is (0.5~1.5): 1.

In some embodiment of the present disclosure, the negative electrode plate includes a negative current collector, a negative active material layer, and a lithium supplement layer. The negative active material layer is located on at least one surface of the negative current collector, and contains the negative active material. The lithium supplement layer is located on a surface of the negative active material layer facing away from the negative negative current collector, and contains the lithium supplement agent. The insulating material is arranged between the negative active material and the lithium supplement layer.

In some embodiment of the present disclosure, the negative electrode plate further includes an insulating layer arranged between the negative active material and the lithium supplement layer, and the insulating layer contains the insulating material.

In some embodiment of the present disclosure, a surface of at least part of the negative active material in the negative active material layer is at least partially coated with the insulating material.

A second aspect of the present disclosure is to provide a preparation method of a secondary battery. The preparation method includes: forming a negative electrode slurry; forming the negative active material layer by applying the negative electrode slurry on at least one surface of a negative current collector; forming an insulating material solution by mixing the insulating material with a solvent; forming an insulating layer by applying the insulating material solution on a surface of the negative active material layer facing away from the negative current collector; forming the lithium supplement layer on a surface of the insulating layer facing away from the negative active material layer to prepare the negative electrode plate; laminating the negative electrode plate and the positive electrode plate; and injecting the electrolyte between the negative electrode plate and the positive electrode plate that are laminated.

In this way, in the present disclosure, during preparing the negative electrode plate, the negative electrode active material layer is first prepared on at least one surface of the negative electrode current collector and then lithium is supplemented. In addition, when the negative electrode slurry is prepared, an aqueous preparation process may be used. Thus, low cost can be lowered without no pollution.

In some embodiment of the present disclosure, the solvent may include one or more of dimethyl carbonate, diethyl carbonate, ethyl methyl carbonate, 1,3-dioxolane, diphenyl carbonate, propene sultone, propenyl-1,3-sultone, triphenyl phosphate, triphenyl phosphite, and sulfolane.

A third aspect of the present disclosure is to provide a preparation method of a secondary battery. The preparation method includes: forming a negative electrode slurry, the negative electrode slurry including the negative active material, in which a surface of at least part of the negative active material is at least partially coated with an insulating material; forming a negative active material layer by applying the negative electrode slurry on at least one surface of a negative current collector; forming the lithium supplement layer on a surface of the negative active material layer facing from the negative current collector to prepare the negative electrode plate; laminating the negative electrode plate and the positive electrode plate; and injecting the electrolyte between the negative electrode plate and the positive electrode plate that are laminated.

A fourth aspect of the present disclosure is to provide an electric device. The electric device includes a secondary battery selected from the secondary battery according to the first aspect of the present disclosure, the secondary battery prepared by the preparation method according to the second aspect of the present disclosure, and the secondary battery prepared by the preparation method according to the third aspect of the present disclosure.

**BRIEF DESCRIPTION OF THE DRAWINGS**

FIG. 1 is a schematic view of a secondary battery according to an embodiment of the present disclosure.
FIG. 2 is an exploded diagram of the secondary battery as shown in FIG. 1 according to an embodiment of the present disclosure.
FIG. 3 is a schematic view of a battery pack according to an embodiment of the present disclosure.
FIG. 4 is a schematic view of an electric device according to an embodiment of the present disclosure, in which a secondary battery is used as a power source.

Reference numerals:
1 battery pack; 2 upper box; 3 lower box; 4 secondary battery; 41 housing; 42 electrode assembly; 43 top cover assembly;

5 electric device.

## DESCRIPTION OF EMBODIMENTS

Hereinafter, embodiments of the negative electrode plate, the preparation method, the secondary battery, the battery module, the battery pack, and the electric device of the present disclosure are specifically disclosed with reference to the accompanying drawings as appropriate. However, there may be cases where unnecessary detailed description is omitted. For example, detailed descriptions of well-known matters and repeated descriptions of practically identical structures are omitted. This is to avoid unnecessarily obscuring the following description to facilitate the understanding by those skilled in the art. In addition, the drawings and the following description are provided to enable those skilled in the art to fully understand the present disclosure and are not intended to limit the subject matter recited in the claims.

The "range" disclosed herein are defined in terms of lower and upper limits, a given range being defined by selecting a lower limit and an upper limit, the selected lower and upper limits defining the boundaries of the particular range. Ranges defined in this manner may or may not be inclusive of the end values and can be arbitrarily combined, i.e. any lower limit can be combined with any upper limit to form a range. For example, if ranges of 60 to 120 and 80 to 110 are listed for a particular parameter, it is understood that ranges of 60 to 110 and 80 to 120 are also contemplated. In addition, the following ranges are all contemplated if the minimum range values listed are 1 and 2, and if the maximum range values listed are 3, 4, and 5: 1 to 3, 1 to 4, 1 to 5, 2 to 3, 2 to 4 and 2 to 5. In the present disclosure, unless otherwise indicated, the numerical range "a-b" represents an abbreviated representation of any real number combination between a and b, where a and b are both real numbers. For example, a numerical range of "0 to 5" indicates that all real numbers between "0 to 5" have been fully set forth herein, and "0 to 5" is merely a shorthand representation of combinations of these numbers. In addition, when it is stated that a certain parameter is an integer of $\geq 2$, it is equivalent to disclosing that the parameter is, for example, an integer of 2, 3, 4, 5, 6, 7, 8, 9, 10, 11, 12, etc.

All embodiments and alternative embodiments of the present disclosure may be combined with each other to form a new technical solution if not specifically stated.

All technical features and alternative technical features of the present disclosure may be combined with each other to form a new technical solution if not specifically stated.

Unless otherwise specified, all steps of the present disclosure may be performed sequentially or may be performed randomly, preferably sequentially. For example, the process includes steps (a) and (b), meaning that the process may include steps (a) and (b) performed sequentially, or may include steps (b) and (a) performed sequentially. For example, the reference to the process may further include step (c), meaning that step (c) may be added to the process in any order. For example, the process may include steps (a), (b) and (c), may also include steps (a), (c) and (b), may also include steps (c), (a) and (b), etc.

Unless otherwise specified, references to "including" and "comprising" in the present disclosure are intended to be open-ended as well as closed-ended. For example, reference to "including" and "comprising" may mean that other components not listed may also be included or contained, or that only listed components may be included or contained.

In the present disclosure, the term "or" is inclusive if not specifically stated. For example, the phrase "A or B" means "A, B, or both A and B". More specifically, condition "A or B" is satisfied by any one of the following conditions: A is true (or present) and B is false (or not present); A is false (or absent) and B is true (or present); or both A and B are true (or present).

In order to improve the capacity reduction of lithium ion batteries due to lithium ion loss during first charge and discharge of the lithium ion batteries, it is necessary to increase the capacity of the batteries by lithium supplement. However, in the related lithium supplement technology, it is easy for a surface of the electrode plate supplemented with lithium to suffer blackening via nitriding and to generate heating. A person skilled in the present disclosure would have analyzed and found that the negative electrode plate is mainly in contact with the lithium supplement agent, and there is an electron path therebetween, and the lithium supplement agent has a corrosion reaction with nitrogen, oxygen and moisture in the air, and therefore moisture needs to be isolated. However, a negative electrode slurry used in the negative electrode preparation process generally contains water, which is an aqueous preparation process; the relevant lithium supplement technology cannot be compatible with the aqueous preparation process, and in the present disclosure, a skilled person analytically finds that after lithium supplement is performed, metallic lithium is coated on the surface of active material particles to prepare a negative electrode, and an organic solvent needs to be used to prepare a slurry, which cannot be compatible with the aqueous preparation process. In the relevant lithium supplement technology, after lithium supplement is performed, the interfacial impedance between the electrode and the electrolyte increases, and a skilled person in the present disclosure has analyzed and found that when an organic polymer or an inorganic compound which is insoluble in the electrolyte is mainly used as a surface protective coating, the interfacial impedance between the electrode and the electrolyte will increase because the active material particles enclose the surface protective coating.

In view of the above, according to the present disclosure, there is provided a secondary battery including a negative electrode plate and an electrolyte. The negative electrode plate includes a negative active material and a lithium supplement agent. An insulating material is dissolved in the electrolyte, and a mass ratio of the insulating material in the electrolyte ranges from 0.1% to 4%. The insulating material is derived from the negative electrode plate prior to injection of the electrolyte and is arranged between the negative active material and the lithium supplement agent in the negative electrode plate prior to the injection of the electrolyte.

Without wishing to be restricted by any theory, in the negative electrode plate of the secondary battery of the present disclosure, by arranging an insulating material between the negative active material and the lithium supplement agent and arranging the insulating material between the negative active material and the lithium supplement agent prior to the injection of the electrolyte, it is possible to block an electron path between the lithium supplement agent and the negative active material, thereby slowing down corrosion reaction of the lithium supplement agent. In addition, reaction of lithium supplement agent with moisture, oxygen, and nitrogen in the air is slowed down, heat generation caused by lithium side reaction in the process of lithium supplement is reduced, safety of the process of lithium supplement is improved, and efficiency of lithium supplement is improved. A skilled person in the present disclosure has found that when a mass ratio of the insulating material in the electrolyte ranges from 0.1% to 4%, it can not only block the electron path between the lithium supplement agent and the negative active material, but also not affect the viscosity and conductivity of the electrolyte after the injection of the electrolyte.

After the injection of the electrolyte, the insulating material is dissolved, a lithium supplement agent acts as an additional lithium source to generate self-discharge lithium insertion, and the introduction of the additional lithium source can increase the cycle life and energy density of the battery. The insulating material is dissolved after the injection of the electrolyte, and there is no insulating material at the interface and thus the interface impedance at the interface cannot be affected. Furthermore, the insulating material does not need to have a gas barrier property, and can even be a gas-permeable soluble particle layer, which can still achieve a better effect.

In the embodiments of the present disclosure, the mass ratio of the insulating material in the electrolyte can range from 0.1% to 4%. For example, the mass ratio of the insulating material included in the negative electrode plate may be 0.1%, 0.5%, 0.7%, 1%, 1.3%, 1.5%, 1.7%, 2%, 2.3%, 2.5%, 2.7%, 3%, 3.3%, 3.5%, 3.8%, and 4% after dissolved in the electrolyte.

In an embodiment of the present disclosure, the negative active material may employ a negative active material for a battery known in the art. As an example, the negative active material may include at least one of artificial graphite, natural graphite, soft carbon, hard carbon, silicon-based materials, tin-based materials, and lithium titanate, etc. The silicon-based material may be selected from at least one of elemental silicon, silicon-oxygen compounds, silicon-carbon complexes, silicon-nitrogen complexes, and silicon alloys. The tin-based material may be selected from at least one of elemental tin, tin oxide compounds, and tin alloys. However, the present disclosure is not limited to these materials, and other conventional materials that can be used as a negative active material for a battery may also be used. These negative active materials may be used alone or in combination of two or more.

In the examples of the present disclosure, the lithium supplement agent known in the art for batteries may be used. As an example, the lithium supplement agent may include at least one of lithium foils, stabilized lithium metal powders, lithium alloy compounds, etc. The lithium alloy compound may be selected from at least one of LixSi@Li$_2$O, artificially coated LixSi, and LixSi/Li$_2$O composites. However, the present disclosure is not limited to these materials, and other conventional materials that can be used as a lithium supplement agent for a battery may also be used. These lithium supplement agents may be used alone or in combination of two or more.

In the embodiment of the present disclosure, the electrolyte for a battery known in the art may be used as the electrolyte. The electrolyte serves to conduct ions between the positive electrode and the negative electrode. The electrolyte may include an electrolyte salt and a solvent.

By way of example, the electrolyte salt may be selected from one or more of lithium hexafluorophosphate (LiPF$_6$), lithium tetrafluoroborate (LiBF$_4$), lithium perchlorate (LiClO$_4$), lithium hexafluoroarsenate (LiAsF$_6$), lithium bis-fluorosulfonimide (LiFSI), lithium bistrifluoromethanesulfonimide (LiTFSI), lithium triflate (LiTFS), lithium difluorooxalato borate (LiDFOB), lithium dioxalato borate (LiBOB), lithium difluorophosphate (LiPO$_2$F$_2$), lithium difluorooxalato phosphate (LiDFOP) and lithium tetrafluorooxalato phosphate (LiTFOP).

By way of example, the solvent may be selected from one or more of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), ethyl fluorocarbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), ethyl methyl sulfone (EMS) and ethyl sulfonyl ethane (ESE).

In some embodiments, an addictive is further included in the electrolyte. For example, the additive may include a negative electrode film-forming additive, and may include a positive electrode film-forming additive, and may further include an additive capable of improving certain properties of the battery, such as an additive for improving overcharge properties of the battery, an additive for improving high-temperature properties of the battery, or an additive for improving low-temperature properties of the battery, etc.

The inventor has intensively studied and found that when the negative electrode plate of the present disclosure satisfies the above-mentioned design conditions, the performance of the secondary battery can be further improved if one or more of the following conditions are also optionally satisfied.

In some embodiments, the mass ratio of the insulating material in the electrolyte may ranges from 2% to 4%, and optionally, the mass ratio of the insulating material in the electrolyte may be 4%.

In some embodiments, the insulating material has an electronic conductivity smaller than $10^{-6}$ S/m at a temperature of 25°C. Further, the insulating material has an electronic conductivity smaller than $10^{-8}$ S/m at the temperature of 25°C.

Note that the electronic conductivity of the insulating material at the temperature of 25°C indicates the ability of the insulating material to transport electrons at the temperature of 25°C, and the lower electronic conductivity indicates the weaker ability of the insulating material to transport electrons and the better of the insulating property.

The insulating material used for the negative electrode plate in the present disclosure has an electronic conductivity controlled within the above-mentioned lower range at the temperature of 25°C, and the insulating material arranged between the negative active material and the lithium supplement agent before the injection electrolyte solution can block the electronic pathway between the lithium supplement agent and the negative active material, thereby slowing down the corrosion reaction of the lithium supplement agent. In addition, the reaction of lithium supplement agent with moisture, oxygen and nitrogen in the air is slowed down, the heat generation caused by lithium side reaction in the process of lithium supplement is reduced, thereby improving the safety of the process of lithium supplement and the efficiency of lithium supplement.

In some embodiments, the insulating material has an ionic conductivity smaller than $10^{-3}$ S/m at the temperature of 25°C.

It is understood that the ionic conductivity of the insulating material at the temperature of 25°C indicates the ability of the insulating material to transport ions at the temperature of 25°C, and the lower ionic conductivity indicates the weaker ability of the insulating material to transport ions and the better insulating property.

In some embodiments, a solubility of the insulating material in the electrolyte is greater than 4 g at a temperature of -20°C;

Note that the solubility of the insulating material in the electrolyte at the temperature of -20°C refers to the mass of the insulating material dissolved when the insulating material reaches a saturated state in 100g of the electrolyte at the temperature of -20°C. A higher solubility indicates a better solubility of the insulating material in the electrolyte.

The solubility of the insulating material in the electrolyte at the temperature of -20°C is greater than 4 g, indicating good solubility of the insulating material in the electrolyte. When the electrolyte is injected, the insulating material is dissolved, the electron path between the lithium supplement agent and the negative active material is reconstructed, and the lithium supplement agent, as an additional lithium source, can self-discharge lithium insertion, increasing the cycle life of the secondary battery as well as the battery capacity and energy density. Also, after the injection of the electrolyte, the insulating material is dissolved and has no effect on the interfacial impedance.

In some embodiments, the insulating material is in a solid state at the temperature of 25°C. When the electrolyte is injected, the solid insulating material can block the electron path between the lithium supplement agent and the negative active material, thereby slowing down the corrosion reaction of the lithium supplement agent.

In some embodiments, the insulating material may include at least one of a polymer, an organic monomer, and an inorganic.

Further, the polymer may include, but is not limited to, at least one of polymethyl methacrylate (PMMA), a block copolymer of polymethyl methacrylate-propylene sulfite, polyethylene oxide (PEO), polyacrylonitrile (PAN), polystyrene (PS).

The organic monomer may include, but is not limited to: at least one of ethylene carbonate (EC), propylene sulfate, ethylene sulfate (DTD), lithium bisoxalato borate (LiBOB).

The inorganic may include, but is not limited to, lithium difluorophosphate (LiPO$_2$F$_2$).

Alternatively, the insulating material includes at least one of polymethyl methacrylate (PMMA), polyethylene oxide (PEO), polyacrylonitrile (PAN), polystyrene (PS), ethylene carbonate (EC), propylene sulfate, ethylene sulfate (DTD), and lithium bis (oxalato) borate (LiBOB).

Optionally, the insulating material includes at least one of polymethyl methacrylate (PMMA), polyacrylonitrile (PAN), ethylene carbonate (EC), propylene sulfate, and ethylene sulfate (DTD).

Optionally, the insulating material includes polymethyl methacrylate (PMMA) and ethylene carbonate (EC); polymethyl methacrylate has better ionic and electronic insulation and better environmental stability; ethylene carbonate is a component in the electrolyte, and its introduction into the battery will not have a negative effect, but since ethylene carbonate is a small molecule, the protective effect on the electrode is limited. Therefore, when polymethyl methacrylate and ethylene carbonate are used together, the performance of the secondary battery can be further improved.

Optionally, the mass ratio of polymethyl methacrylate to ethylene carbonate may be (0.5~1.5):1. When the mass ratio of polymethyl methacrylate to ethylene carbonate is outside the range, introduction of too much polymethyl methacrylate will increase the sectional resistance.

Note that, in the present disclosure, the mass ratio of the insulating material in the above-mentioned electrolyte ranges from 0.1% to 4%, which refers to the mass concentration of the insulating material dissolved in the electrolyte originating from the negative electrode plate prior to the injection of the electrolyte.

In other words, if the material of the insulating material is the same as one or more of the original components in the electrolyte, the above-mentioned mass ratio of the insulating material in the electrolyte in the present disclosure does not contain the mass concentration of the same component as the insulating material in the original components in the electrolyte, and merely refers to the mass concentration of the insulating material dissolved in the electrolyte originating from the negative electrode plate prior to the injection of the electrolyte. The concentration test method at this time may include: firstly, measuring the mass of the component contained in the electrolyte which is the same as the insulating material prior to the injection the electrolyte, then determining the mass of the component contained in the electrolyte which is the same as the insulating material after electrolyte is injected and after formation, in which the difference between the two is the mass of the insulating material contained in the electrolyte, and further calculating the percentage of the mass of the insulating material to the mass of the electrolyte after electrolyte is injected and after formation, i.e. the mass ratio of the insulating material in the electrolyte. It can be understood that, if the material of the insulating material is not the same as the original components in the electrolyte, the concentration test method at this time may include: measuring the mass of the electrolyte after the injection of the electrolyte and after formation, determining the mass of the insulating material contained in the electrolyte after the injection of the electrolyte and after formation, and calculating the percentage of the mass of the insulating material to the mass of the electrolyte after the injection of the electrolyte and after formation, i.e. the mass ratio of the insulating material in the electrolyte. In some embodiments, the negative electrode plate may include a negative current collector, a negative active material layer and a lithium supplement layer. The negative active material layer is located on at least one surface of the negative current collector, and the lithium supplement layer is located on a surface of the negative active material layer away from the negative current collector. The negative active material layer includes the negative active material, and the lithium supplement layer includes the lithium supplement agent. The insulating material is arranged between the negative active material and the lithium supplement layer.

In some embodiments, the negative electrode plate further may include an insulating layer arranged between the negative active material and the lithium supplement layer, and the insulating layer contains the insulating material.

It is understood that the insulating material is formed as the insulating layer between the negative active material layer and the lithium supplement layer. The lithium supplement layer, the insulating layer, and the negative active material layer are formed as a sandwiched structure of lithium supplement layer/insulating layer/negative active material layer.

The present disclosure also provides a preparation method of the negative electrode plate of the above-mentioned sandwiched structure, which may include operations at blocks S11 to S15.

At block S11, a negative electrode slurry is formed.

The negative electrode slurry contains a negative active material, and it is understood that a binder, a conductive agent, and other optional auxiliary agents may be optionally contained. The negative electrode slurry may be prepared by aqueous preparation process with low cost and no pollution.

At block S12, the negative electrode slurry is applied on at least one surface of a negative current collector to form a negative active material layer.

It can be understood that the above-mentioned negative electrode slurry may also be applied on both surfaces of the negative current collector to respectively form a negative active material layer. Accordingly, an insulating layer and a lithium supplement layer are subsequently formed on the surface of each negative active material layer.

At block S13, the insulating material is mixed with a solvent to form an insulating material solution.

At block 14, the insulating material solution is applied on a surface of the negative active material layer away from the negative current collector to form an insulating layer.

At block S15, the lithium supplement layer is formed on a surface of the insulating layer away from the negative active material layer to prepare the negative electrode plate.

Thus, when the negative electrode plate is prepared in the present disclosure, firstly a negative active material layer is prepared on at least one surface of the negative current collector and then lithium is supplemented, and when a negative electrode slurry is prepared, an aqueous preparation process can be used, with low cost and no pollution.

In some embodiments, the solvent may include one or more of dimethyl carbonate, diethyl carbonate, ethyl methyl carbonate, 1,3-dioxolane, diphenyl carbonate, propene sultone, propenyl-1,3-sultone, triphenyl phosphate, triphenyl phosphite, and sulfolane.

In some embodiments, a surface of at least part of the negative active material in the negative active material layer is at least partially coated with the insulating material. Accordingly, the present disclosure also provides a preparation method of a negative electrode plate, which may include operations at blocks S21 to S23.

At block S21, a negative electrode slurry is formed. The negative electrode slurry includes a negative active material, and a surface of at least part of the negative active material is at least partially coated with the insulating material.

At block S22, the negative electrode slurry is applied on at least one surface of a negative current collector to form a negative active material layer.

At block S23, the lithium supplement layer is formed on a surface of the negative active material layer away from the negative current collector.

It is understood that the negative active material may be coated with the insulating material on part of the surface evenly; the negative active material may be coated on all surfaces with the insulating material evenly; only a part of the surface of the negative active material may be coated with the insulating material, and a part of the surface may be coated with the insulating material, or the entire surface may be coated with the insulating material. The lithium supplement layer, the negative active material, and the insulating material are formed into a two-layer structure of lithium supplement layer/insulating material@graphite particles, in which the insulating material@graphite particles indicate that the surface of at least part of the negative active material is at least partially coated with the insulating material.

In some embodiments, the negative electrode plate further may include an insulating layer arranged between the negative active material and the lithium supplement layer. The insulating layer contains the insulating material.

It is understood that the insulating material may be formed into an insulating layer between the negative active material layer and the lithium supplement layer, while the insulating material may also enclosure at least part of the surface of at least part of the negative active material.

In some of these embodiments, the negative current collector may be a conventional metal foil or a composite current collector (e.g. a metal material may be arranged on a polymeric base material to form a composite current collector). As an example, the negative current collector may employ a copper foil. The composite current collector may include a polymer material base layer and a metal layer formed on at least one surface of the polymer material base layer. The composite current collector may be formed by forming a metallic material (copper, copper alloy, nickel, nickel alloy, titanium, titanium alloy, silver, silver alloy, etc.) on the polymer material base material such as polypropylene (PP), polyethylene terephthalate (PET), polybutylene terephthalate (PBT), polystyrene (PS), polyethylene (PE), etc.

The negative active material layer may also optionally include a binder, a conductive agent, and other optional adjuvants.

As an example, the conductive agent may be one or more of superconducting carbon, acetylene black, carbon black, ketjen black, carbon dots, carbon nanotubes, graphene, and carbon nanofibers.

As an example, the binder may be at least one of styrene butadiene rubber (SBR), polyacrylic acid (PAA), sodium polyacrylate (PAAS), polyacrylamide (PAM), polyvinyl alcohol (PVA), sodium polyacrylate (PAAS), sodium alginate (SA), polymethacrylic acid (PMAA) and carboxymethyl chitosan (CMCS).

By way of example, other optional adjuvants may be thickening and dispersing agents (e.g. sodium carboxymethyl cellulose CMC-Na), PTC thermistor materials, etc.

The present disclosure also provides a preparation method of a secondary battery, including the above-mentioned step of preparing the negative electrode plate, and may further include operations at blocks S31 and S32.

At block S31, the negative electrode plate and the positive electrode plate are laminated.

At block S32, an electrolyte is injected between the negative electrode plate and the positive electrode plate that are laminated.

All of the raw materials, not specifically described, can be obtained commercially.

Generally, the secondary battery includes a positive electrode plate and a separator. During charge and discharge of the battery, active ions are intercalated and de-intercalated between the positive electrode plate and the negative electrode plate. The separator serves to isolate the positive electrode plate and the negative electrode plate.

[Positive electrode plate]

In the secondary battery, the positive electrode plate usually includes a positive current collector and a positive electrode film layer arranged on at least one surface of the positive current collector. The positive electrode film layer is a positive active material.

As an example, the positive current collector has two surfaces opposite to each other in a thickness direction thereof, and a positive electrode film layer is arranged on either or both of the two surfaces opposite to the positive current collector.

In some embodiments, the positive current collector may be a metal foil or a composite current collector. For example, as the metal foil, aluminum foil may be used. The composite current collector may include a polymer material base layer and a metal layer formed on at least one surface of the polymer material base layer. The composite current collector may be formed by forming a metallic material (aluminum, aluminum alloy, nickel, nickel alloy, titanium, titanium alloy, silver, silver alloy, etc.) on a substrate of a high molecular material such as a substrate of polypropylene (PP), polyethylene terephthalate (PET), polybutylene terephthalate (PBT), polystyrene (PS), polyethylene (PE), etc.

In some embodiments, when the secondary battery is a lithium ion battery, the positive active material may employ a positive active material for a lithium ion battery known in the art. As an example, the positive active material may include at least one of lithium-containing phosphates of the olivine structure, lithium transition metal oxides, and their respective modified compounds. However, the present disclosure is not limited to these materials, and other conventional materials that can be used as a positive active material for a battery may also be used. These positive active materials may be used alone or in combination of two or more. Examples of lithium transition metal oxides may include, but are not limited to, lithium cobalt oxides (e.g. $LiCoO_2$), lithium nickel oxides (e.g. $LiNiO_2$), lithium manganese oxides (e.g. $LiMnO_2$, $LiMn_2O_4$), lithium nickel cobalt oxides, lithium manganese cobalt oxides, lithium nickel manganese oxides, lithium nickel cobalt manganese oxides (e.g. $LiNi_{1/3}Co_{1/3}Mn_{1/3}O_2$ (also referred to as $NCM_{333}$ for short), $LiNi_{0.5}Co_{0.2}Mn_{0.3}O_2$ (also referred to as $NCM_{523}$ for short), at least one of $LiNi_{0.5}Co_{0.25}Mn_{0.25}O_2$ (also referred to as $NCM_{211}$ for short), $LiNi_{0.6}Co_{0.2}Mn_{0.2}O_2$ (also referred to as $NCM_{622}$ for short), $LiNi_{0.8}Co_{0.1}Mn_{0.1}O_2$ (also referred to as NCMsn for short), lithium nickel cobalt aluminum oxide (such as $LiNi_{0.85}Co_{0.15}Al_{0.05}O_2$), and modified compounds thereof, and the like. Examples of the lithium-containing phosphate of the olivine structure may include, but are not limited to, at least one of lithium iron phosphate (such as $LiFePO_4$ (also referred to as LFP for short)), a composite of lithium iron phosphate and carbon, lithium manganese phosphate (such as $LiMnPO_4$), a composite of lithium manganese phosphate and carbon, lithium iron manganese phosphate, a composite of lithium iron manganese phosphate and carbon.

In some embodiments, when the secondary battery is a lithium ion battery, the positive active material may employ a positive active material for a lithium ion battery known in the art. As an example, the positive active materials may be used aloneor in combination of two or more. The positive active material can be selected from a sodium iron composite oxide ($NaFeO_2$), a sodium cobalt composite oxide ($NaCoO_2$), a sodium chromium composite oxide ($NaCrO_2$), a sodium manganese composite oxide ($NaMnO_2$), a sodium nickel composite oxide ($NaNiO_2$), a sodium nickel titanium composite oxide ($NaNi_{1/2}Ti_{1/2}O_2$), a sodium nickel manganese composite oxide ($NaNi_{1/2}Mn_{1/2}O_2$) and a sodium iron manganese composite oxide ($Na_{2/3}Fe_{1/3}Mn_{2/3}O_2$), sodium nickel cobalt manganese composite oxide ($NaNi_{1/3}Co_{1/3}Mn_{1/3}O_2$), sodium iron phosphate compound ($NaFePO_4$), sodium manganese phosphate compound ($NaMn_PO_4$), sodium cobalt phosphate compound ($NaCoPO_4$), prussian blue materials, polyanionic materials (phosphate, fluorophosphate, pyrophosphate, sulfate), etc. but the present disclosure is not limited to these materials, and other conventionally known materials which can be used as positive active materials of a sodium ion battery may also be used in the present disclosure.

In some embodiments, the positive electrode film layer also optionally includes a binder. As an example, the binder may include at least one of polyvinylidene fluoride (PVDF), tetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and a fluorine-containing acrylate resin.

In some embodiments, the positive electrode film layer also optionally includes a conductive agent. As an example, the conductive agent may include at least one of superconducting carbon, acetylene black, carbon black, ketjen black, carbon dots, carbon nanotubes, graphene, and carbon nanofibers.

In some embodiments, the positive electrode plate may be prepared by: dispersing the above-mentioned components for preparing the positive electrode plate, such as the positive active material, the conductive agent, the binder and any other components, in a solvent (such as N-methyl pyrrolidone) to form a positive electrode slurry; applying the positive electrode slurry on the positive current collector; obtaining and the positive electrode plate through drying, cold pressing and other processes.

[Separator]

In some embodiments, a separator is further included in the secondary battery. There is no particular limitation on the kind of the separator in the present disclosure, and any known separator with a porous structure having good chemical stability and mechanical stability may be selected.

In some embodiments, the separator may be made of a material selected from at least one of glass fiber, non-woven fabric, polyethylene, polypropylene, and polyvinylidene fluoride. The separator may be a single-layer film or a multilayer composite film, without particular limitation. When the separator is the multilayer composite film, the materials of each layer may be the same or different, and the present disclosure is not limited in this regard.

In some embodiments, the positive electrode plate, the negative electrode plate, and the separator can be formed into an electrode assembly by a winding process or a lamination process.

In some embodiments, the secondary battery may include an outer package. The outer package may be configured to encapsulate the electrode assembly and the electrolyte.

In some embodiments, the outer package of the secondary battery may be a hard case such as a hard plastic case, an aluminum case, a steel case, and the like. The outer package of the secondary battery may also be a soft package, such as a pouch-type soft package. The material of the soft bag may be plastic, and as the plastic, polypropylene, polybutylene terephthalate, polybutylene succinate, etc. may be listed.

In some embodiments, the secondary battery of the present disclosure is a lithium ion secondary battery.

A secondary battery may be prepared by a conventional method in the art, which for example, incudes: winding (or laminating) a positive electrode plate, a separator, and a negative electrode plate in sequence to locate the separator between the positive electrode plate and the negative electrode plate to perform the function of separation to obtain an electric core, placing the electric core in an outer package, and injecting an electrolyte and sealing to obtain the secondary battery.

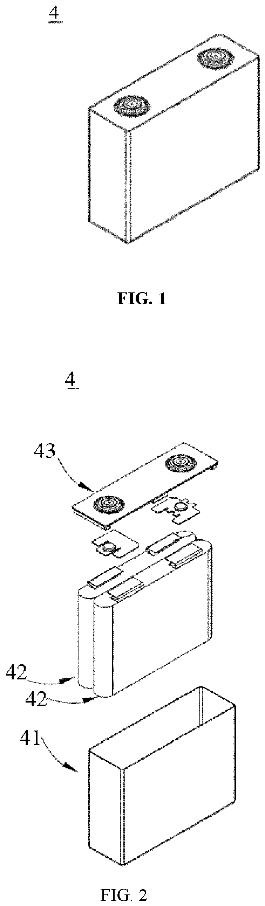

The shape of the secondary battery is not particularly limited in the embodiment of present disclosure, and may be cylindrical, square or any other shape. FIG. 1 is a secondary battery 4 having a square structure as one example.

In some embodiments, referring to FIG. 2, the outer package may include a housing 41 and a cover plate 43. Here, the housing 41 may include a bottom plate and a side plate connected to the bottom plate. The bottom plate and the side plate enclose to form an accommodation cavity. The housing 41 has an opening in communication with the accommodation cavity, and the cover plate 43 can cover the opening to close the accommodation cavity. The positive electrode plate, the negative electrode plate, and the separator can be assembled into an electrode assembly 42 by a winding process or a lamination process. An electrode assembly 42 is enclosed within the accommodation cavity. The electrolyte infiltrates the electrode assembly 42. One or more electrode assemblies 42 may be included in the secondary battery 4, and a person skilled in the art would have been able to make a selection as desired.

In some embodiments, the secondary batteries can be assembled into a battery pack, and the number of secondary batteries included in the battery pack can be selected by a person skilled in the art according to the application and capacity of the battery module.

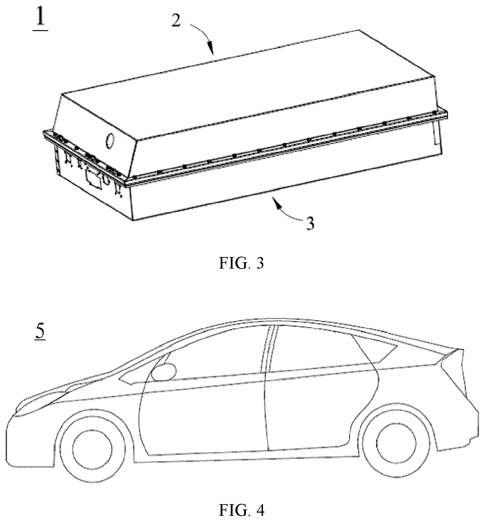

FIG. 3 is an exemplary battery pack 1. Referring to FIG. 3, the battery pack 1 may include a battery box and a plurality of secondary batteries 4 provided in the battery box. The battery box includes an upper box 2 and a lower box 3. The upper box 2 covers on the lower box 3 to form an enclosed space for accommodating the secondary battery 4. The plurality of secondary batteries 4 may be arranged in the battery box in an arbitrary manner.

[Electric device]

Embodiments of the present disclosure are also to provide an electric device including at least one of the secondary battery, or the battery pack provided herein. The secondary battery or the battery pack may be used as a power source for the electric device as well as an energy storage unit for the electric device. The electric device may include, but not limited to, mobile equipment (e.g. cell phones, notebook computers, etc.), electric vehicles (e.g. pure electric vehicles, hybrid electric vehicles, plug-in hybrid electric vehicles, electric bicycles, electric scooters, electric golf carts, electric trucks, etc.), electric trains, ships and satellites, energy storage systems, etc.

As the electric device, the secondary battery or the battery pack may be selected according to its usage requirements.

FIG. 4 is an exemplary electric device. The electric device 5 is a pure electric vehicle, a hybrid electric vehicle, or a plug-in hybrid electric vehicle. To meet the high power and high energy density requirements of the secondary battery for the electric device, the battery pack may be employed.

As another example, the device may be a cell phone, tablet computer, notebook computer, etc. The device is generally required to be light and thin, and a secondary battery may be used as a power source.

Benefits of the present disclosure are further illustrated by the following specific examples.

**Embodiments**

In order to make the technical problems, technical solutions and advantageous effects solved by the present disclosure more clear, the following detailed description will be made in conjunction with the embodiments and the drawings. The embodiments described below are only some, but not all embodiments of the present disclosure. The following description of at least one exemplary embodiment is merely illustrative in nature and is in no way intended to limit the application and its applications. Based on the embodiments of the present disclosure, all other embodiments obtained by a person of ordinary skill in the art without inventive effort fall within the scope of the present disclosure.

The materials used in the examples of this application are all commercially available.

I. Preparation of the lithium ion secondary battery

Embodiment 1

1. Preparation of the negative electrode plate including the following steps.

At step(1), An artificial graphite, acetylene black, styrene-butadiene rubber (SBR) and sodium carboxymethyl cellulose (CMC) are mixed based on a weight ratio of 95:1.5:3.1:0.4, added with deionized water, stirred thoroughly and mixed uniformly to obtain a negative electrode slurry, and then applied on two surfaces of a negative current collector copper foil, dried and cold pressed to form a negative active material layer; based on the weight excluding the solvent, the coating amount of the negative electrode slurry is $0.136g/1540.25mm^2$, and the gram capacity of the artificial graphite is 340 mAh/g;

At step (2), Polymethyl methacrylate of 100g (PMMA, as an insulating material) is dissolved in dimethyl carbonate (DMC) of 900 g to obtain a PMMA solution with a mass percentage of 10%, the solution is applied on the surfaces of the two negative active material layers of the product obtained in step (1) by spraying, and air-dried at the temperature of 25°C for 30 min to form an insulating layer;

At step (3), two lithium foils with a thickness of 10 $\mu$m are respectively composited on the surfaces of the two insulating layers of the product obtained in step (2) by means of rolling to form two lithium supplement layers so as to obtain a negative electrode plate with a sandwiched structure, and the obtained lithium supplement layers have strip-shaped hollow gaps parallel to each other, the width of the strip-shaped hollow gaps is 50 $\mu$m, and the width of the solid portion between two adjacent strip-shaped hollow gaps is 200 $\mu$m; the gram capacity of lithium foil is 3861 mAh/g, and the amount of lithium foil used is $3.45$ mg/1540.25 $mm^2$.

2. Preparation of positive electrode plate

Lithium iron phosphate, acetylene black and polyvinylidene fluoride (PVDF) are mixed in a weight ratio of 94:4:2, adding N-methyl pyrrolidone, stirred thoroughly and mixed uniformly to obtain a positive electrode slurry, and then applied on both surfaces of the positive current collector aluminum foil, dried and cold pressed to obtain a positive electrode plate; the applying weight of the positive electrode slurry is $0.224$ g/1540.25mm$^2$ based on the weight excluding the solvent, and the gram capacity of the lithium iron phosphate is 139 mAh/g.

3. Preparation of electrolyte

Ethylene carbonate (EC), polycarbonate (PC) and dimethyl carbonate (DMC) are mixed in a weight ratio of 3:3:3 in an argon atmosphere glove box with a water content of <10 ppm, then added with lithium hexafluorophosphate ($LiPF_6$), vinylene carbonate (VC), ethylene sulphate (DTD) and polystyrene (PS), and after stirring uniformly, the electrolyte is prepared. The molar concentration of $LiPF_6$ is 1 mol/L, and the mass percentages of VC, DTD and PS are 3%, 1% and 1%, respectively.

4. Preparation of separator

A polyethylene porous membrane is used as the separator.

5. Preparation of lithium ion secondary battery

The positive electrode plate, the separator, and the negative electrode plate are laminated sequentially to position the separator between the positive electrode and the negative electrode to provide separation, and then are wound to obtain a jelly roll. The jelly roll is placed in an outer package, a formulated electrolyte is injected and packaged for formation to obtain the lithium ion secondary battery.

Embodiments 2 to 19

The preparation methods of the secondary batteries of Embodiments 2 to 19 are similar to that of the secondary battery of Embodiment 1 expect for the type of insulating material used in step (2) or the total amount of the insulating material solution with the same concentration applied in step (2) when preparing the negative electrode plate, and since the total amount of the insulating material solution with the same concentration applied in step (2) is different, the mass ratio of the insulating material dissolved in the electrolyte is different, and details thereof are shown in Table 1.

Embodiment 20

The preparation method of the secondary battery of Embodiment 20 is similar to that of the secondary battery of Embodiment 1 except for the preparation method of the negative electrode plate.

The particular preparation method of the negative electrode plate includes: (1) mixing an artificial graphite (with a gram capacity of 340 mAh/g), acetylene black, polyvinylidene fluoride (PVDF) and polymethyl methacrylate (PMMA) based on a weight ratio of 93:1.5:3.5:2, adding N-methylpyrrolidone, stirring thoroughly and mixing uniformly to obtain a negative electrode slurry, then applying on both surfaces of a negative current collector copper foil, drying, and cold-pressing; the coating amount of the negative electrode slurry is 0.139g/1540.25 $mm^2$ based on the weight excluding the solvent, and the gram capacity of the artificial graphite is 340 mAh/g; and (2) compositing two lithium foils (gram capacity: 3861mAh/g) with a thickness of 10 $\mu$m on two surfaces of the product obtained in step (1) to form two lithium supplement layers, so as to prepare a lithium supplement layer/an insulating material@a negative electrode plate with a graphite particle structure. The obtained lithium supplement layer has stripe-shaped hollow gaps parallel to each other, the width of the stripe-shaped hollow gaps is 50 $\mu$m, and the width of a solid portion between two adjacent stripe-shaped hollow gaps is 200 $\mu$m; the gram capacity of lithium foil is 3861mAh/g, and the amount of lithium foil used is 3.45 mg/1540.25 mm$^2$.

Embodiments 21 to 22

The secondary batteries of Embodiments 21 to 22 were prepared in the same method as the secondary battery of Embodiment 20 except for the type of the insulating material used in step (2) in the preparation of the negative electrode plate, and details thereof are shown in Table 1.

Comparative Example 1

The preparation method of the secondary battery of Comparative Example 1 differs from that of Embodiment 1 in that no insulating layer is formed in the prepared negative electrode plate.

Comparative example 2

The preparation method of the secondary battery of Comparative Example 2 differs from that of Embodiment 1 in that no lithium supplement agent is added to the prepared negative electrode plate.

Comparative example 3

The preparation method of the secondary battery of Comparative Example 3 differs from that of Embodiment 1 in that the total amount of polymethyl methacrylate (PMMA) solution of the same concentration applied in step (2) is different when preparing the negative electrode plate, and the mass ratio of polymethyl methacrylate (PMMA) dissolved in the electrolyte is 0.05%.

Comparative example 4

The preparation method of the secondary battery of Comparative Example 4 differs from that of Embodiment 1 in that the total amount of the solution of polymethyl methacrylate (PMMA) with the same concentration applied in step (2) is different when preparing the negative electrode plate, and the mass ratio of the solution of polymethyl methacrylate (PMMA) in the electrolyte is 5%.

II. Performance test of the secondary lithium ion battery

(1) Lithium efficiency test of the lithium ion secondary battery

The sandwiched electrodes are punched into 41 mm*49.5 mm small laminations and the lithium-coated copper foil is punched into 43.5 mm*51 mm. The lithium sheet with a sandwiched structure, the separator, the sandwiched electrode, the separator and the lithium sheet are laminated sequentially to position the separator between the positive and negative electrodes to provide the separation, and a laminated jelly roll is obtained. The jelly roll is placed in an outer package, a formulated electrolyte is injected and packaged to obtain the lithium ion secondary battery. Then, using a sandwiched structure electrode as the positive electrode and a lithium electrode as a negative electrode, 0.04C is charged to 2 V, and the charge capacity C1 (unit: mAh) thereof is detected, where 1C represents a current at which the theoretical capacity is completely discharged within 1 hour. Lithium efficiency of lithium ion secondary battery=C 1/(41 *49.5/1540.25 *3.45 *2*3.861)* 100%.

Accordingly, the same processing is performed for the electrode of the lithium supplement layer/insulating material@graphite particle structure for lithium efficiency test.

(2) Cycling performance test of the secondary lithium ion battery at room temperature

At the temperature of 25°C, the lithium ion secondary battery is charged with 1C constant current to a voltage of 3.65 V, and then the lithium ion secondary battery is charged with 3.65 V constant voltage to a current of 0.05C; after standing for 5 mins, the lithium ion secondary battery is discharged with 1C constant current to a voltage of 2.5 V, which is a charge-discharge cycle process, and the discharge capacity of this time is the discharge capacity of the first cycle. The lithium ion secondary battery is subjected to a charge-discharge test for multiple cycles according to the method until the discharge capacity of the lithium ion secondary battery decays to 80%, and the number of cycles of the lithium ion secondary battery is recorded.

(3) Cycling performance test of the secondary lithium ion battery at high temperature

At a temperature of 60°C, the lithium ion secondary battery is charged with 1 C constant current to a voltage of 3.65 V, and then the lithium ion secondary battery is charged with 3.65 V constant voltage to a current of 0.05 C; after standing for 5 mins, the lithium ion secondary battery is discharged with 1 C constant current to a voltage of 2.5 V, which is a charge-discharge cycle process, and the discharge capacity at this time is the discharge capacity of the first cycle. The lithium ion secondary battery is subjected to a charge-discharge test for multiple cycles as described above, and the discharge capacity of the 500th cycle is measured.

Capacity retention of the lithium ion secondary battery after 500 cycles at the temperature of 60°C=(discharge capacity at 500th cycle/discharge capacity at first cycle)×100%.

Relevant parameters and performance test results of the lithium ion secondary batteries prepared in the above Embodiments and Comparative Examples are shown in Table 1.

Table 1

| Group | Types of insulating materials and mass ratio thereof dissolved electrolyte | | Structure of the negative electrode | Lithium efficiency (%) | Cycles for capacity decay to 80% at 25°C | Capacity retention after 500 cycles at 60°C (%) |
|---|---|---|---|---|---|---|
| | Insulating material 1 | Insulating material 2 | | | | |
| Embodiment 1 | PMMA, 2% | / | Sandwiched structure | 80.3% | 2104 | 91.75% |
| Embodiment 2 | PMMA, 0.1% | / | Sandwiched structure | 73.4% | 1653 | 90.45% |
| Embodiment 3 | PMMA, 0.5% | / | Sandwiched structure | 75.1% | 1710 | 90.50% |
| Embodiment 4 | PMMA, 1% | / | Sandwiched structure | 77.8% | 1852 | 90.71% |
| Embodiment 5 | PMMA, 1.5% | / | Sandwiched structure | 79.5% | 1904 | 91.20% |
| Embodiment 6 | PMMA, 2.5% | / | Sandwiched structure | 81.2% | 2240 | 91.93% |
| Embodiment 7 | PMMA, 3% | / | Sandwiched structure | 81.8% | 2419 | 92.42% |
| Embodiment 8 | PMMA, 3.5% | / | Sandwiched structure | 82.1% | 2513 | 92.51% |
| Embodiment 9 | PMMA, 4% | / | Sandwiched structure | 82.9% | 2532 | 92.55% |
| Embodiment 10 | PEO, 2% | / | Sandwiched structure | 81.8% | 2205 | 91.96% |
| Embodiment 11 | PAN, 2% | / | Sandwiched structure | 82.3% | 2510 | 92.52% |

(continued)

| Group | Types of insulating materials and mass ratio thereof dissolved electrolyte | | Structure of the negative electrode | Lithium efficiency (%) | Cycles for capacity decay to 80% at 25°C | Capacity retention after 500 cycles at 60°C (%) |
|---|---|---|---|---|---|---|
| | Insulating material 1 | Insulating material 2 | | | | |
| Embodiment 12 | PS, 2% | / | Sandwiched structure | 80.7% | 2187 | 91.93% |
| Embodiment 13 | EC, 2% | | Sandwiched structure | 83.6% | 2401 | 92.34% |
| Embodiment 14 | Propenyl sulfate, 2% | / | Sandwiched structure | 82.2% | 2359 | 92.26% |
| Embodiment 15 | DTD, 2% | / | Sandwiched structure | 82.3% | 2426 | 92.38% |
| Embodiment 16 | LiBOB, 2% | / | Sandwiched structure | 80.1% | 2342 | 92.23% |
| Embodiment 17 | PMMA, 0.5% | EC, 1% | Sandwiched structure | 82.0% | 2430 | 92.13% |
| Embodiment 18 | PMMA, 1% | EC, 1% | Sandwiched structure | 83.8% | 2544 | 92.57% |
| Embodiment 19 | PMMA, 1.5% | EC, 1% | Sandwiched structure | 83.3% | 2500 | 92.03% |
| Embodiment 20 | PMMA, 2% | / | lithium supplement layer/ insulating material@ graphite particles | 84.5% | 2018 | 91.54% |
| Embodiment 21 | Block copolymer of polymethyl methacrylat e-propylene sulfite, 2% | / | lithium supplement layer/ insulating material@ graphite particle | 83.1% | 2484 | 91.61% |
| Embodiment 22 | $LiPO_2F_2$, 2% | / | lithium supplement layer/ insulating material@ graphite particles | 84.2% | 2090 | 91.9% |
| Comparative Example 1 | / | / | / | 70.1% | 1398 | 89.35% |
| Comparative example 2 | PMMA, 2% | / | / | 71.3% | 1412 | 89.42% |
| Comparative example 3 | PMMA, 0.05% | / | Sandwiched structure | 72.1% | 1513 | 89.89% |
| Comparative example 4 | PMMA, 5% | / | Sandwiched structure | 81.5% | 1759 | 90.81% |

Note that, in Embodiments 1 to 11, Embodiment 14, Embodiment 16, Embodiments 20-22 or Comparative Examples 3 to 4, when the mass ratio of the insulating material dissolved in the electrolyte is determined, the mass of the electrolyte after the injection of the electrolyte and after formation is measured, the mass of the insulating material contained in the electrolyte after the injection of the electrolyte and after formation is measured, and the percentage of the mass of the insulating material to the mass of the electrolyte after the injection of the electrolyte and after formation is calculated.

In Embodiment 12, PS is used as an insulating material, and the electrolyte contains PS, then in Embodiment 12, when determining the mass fraction of PS dissolved in the electrolyte, firstly, the mass of PS contained in the electrolyte prior to the injection the electrolyte is measured, then the mass of PS contained in the electrolyte after the injection of the electrolyte and after formation is measured, the difference between the two is the mass of PS contained in the electrolyte, and the mass percentage of PS in the electrolyte after the injection of the electrolyte and after formation is further calculated.

In Embodiment 13, EC is used as the insulating material, EC is contained in the electrolyte, and EC will be consumed after formation. Then in embodiment 13, when determining the mass ratio of EC dissolved in the electrolyte, a first mass difference of EC in the electrolyte before and after formation in embodiment 1 can be determined by using Embodiment 1 as a control; then, a second mass difference between the mass of EC contained in the electrolyte prior to the injection the electrolyte and the mass of EC contained in the electrolyte after the injection of the electrolyte and after formation in Embodiment 13 is measured, and the percentage of the difference between the second mass difference and the first mass difference to the mass of the electrolyte after the injection of the electrolyte and after formation is further calculated, i.e. the mass ratio of EC dissolved in the electrolyte.

In Embodiment 15, DTD is used as the insulating material, DTD is contained in the electrolyte, and the DTD will be consumed after formation. Then in Embodiment 15, when determining the mass ratio of the DTD dissolved in the electrolyte, a first mass difference of the DTD in the electrolyte before and after formation in Embodiment 1 can be determined using Embodiment 1 as a control; then, a second mass difference between the mass of the DTD contained in the electrolyte prior to the injection the electrolyte and the mass of the DTD contained in the electrolyte after the injection of the electrolyte and after formation in Embodiment 15 is measured, and the percentage of the difference between the second mass difference and the first mass difference to the mass of the electrolyte after the injection of the electrolyte and after formation is further calculated, i.e. the mass ratio of the DTD dissolved in the electrolyte.

In Embodiments 17 to 19, when the mass ratio of the PMMA dissolved in the electrolyte is determined by using the common insulating material of PMMA and EC in different amounts, the mass of the electrolyte after the injection of the electrolyte and after formation is measured, the mass of the PMMA contained in the electrolyte after the injection of the electrolyte and after formation is measured, and the percentage of the mass of the PMMA in the electrolyte after the injection of the electrolyte and after formation is calculated. When the mass fraction of EC dissolved in the electrolyte is measured, the measurement is performed in the same manner as in Embodiment 13.

As can be seen from each of the embodiments of Table 1 and Comparative Example 1, by providing the insulating material between the negative active material and the lithium supplement agent in the negative electrode plate, the lithium efficiency, capacity retention rate, and cycle life of the secondary battery can be simultaneously improved, indicating that the lithium supplement efficiency and cycling performance of the secondary battery are improved. In particular, the lithium efficiency, capacity retention rate and cycle life of the secondary battery can be further improved by further optimizing the kind of insulating material and the mass ratio of the insulating material dissolved in the electrolyte.

Further, the main difference in Embodiments 1 to 9 is that the mass ratio of the insulating material after dissolved in the electrolyte is different, wherein the mass ratio of the insulating material after being dissolved in the electrolyte in Embodiment 2 is at least 0.1%, and thus the lithium efficiency, capacity retention rate and cycle life of the lithium ion secondary cell prepared in Embodiment 2 are lower relative to Embodiments 1 and 3-9. Since the mass ratio of the insulating material dissolved in the electrolyte in Embodiment 9 is 4% at most, the lithium efficiency, capacity retention and cycle life of the lithium ion secondary cell prepared in Embodiment 9 are superior to those of Embodiments 1 to 8.

Further, the main difference between Embodiment 1 and Embodiment 13 is that types of insulating materials are different, EC is used as the insulating material in Embodiment 13, and the lithium efficiency, capacity retention rate and cycle life of the lithium ion secondary battery prepared in Embodiment 13 are superior to those of Embodiment 1. The technician analyzed the reason for this, which may be that EC has no significant effect on the interfacial impedance of the cell relative to PMMA.

Further, Embodiment 18 differs from Embodiments 1 and 13 mainly in that the insulating material of Embodiment 18 uses PMMA and EC in a mass ratio of 1:1, and the lithium ion secondary battery prepared in Embodiment 18 has superior lithium efficiency, capacity retention and cycle life relative to both Embodiments 1 and 13. The technician analyzed the reason for this, which may be due to the better ionic insulation and electronic insulation and better environmental stability of polymethyl methacrylate; ethylene carbonate is a component in the electrolyte, and introduction thereof into the interior of the battery does not have a negative effect, but since ethylene carbonate is a small molecule, the protective effect on the electrode is limited, and when polymethyl methacrylate and ethylene carbonate are used together, the performance of the secondary battery can be further improved.

Further, the main difference in Embodiments 17 to 19 is that the mass ratio of PMMA and EC in the insulating material is different, when the mass ratio of PMMA:EC is (0.5-1.5):1, the effect is better.

Further, the main difference between Embodiment 1 and Embodiment 20 is that the structure of the negative electrode electrode plate is different, the lithium supplement layer, the negative active material and the insulating material in Embodiment 20 form a two-layer structure of lithium supplement layer/insulating material@graphite particles, the lithium efficiency of the lithium ion secondary battery prepared in Embodiment 20 is superior with respect to Embodiment 1, and then the capacity retention rate and cycle life thereof are inferior with respect to Embodiment 1. The technician analyzed the reason, which may be because the PMMA in Embodiment 20 has a better coating protection effect on graphite particles and a better insulation property; however, the electrode plate impedance increases, thereby reducing capacity retention and cycle life.

Further, the main difference between Comparative Example 1 and Comparative Example 2 is that Comparative Example 2 is without the addition of a lithium supplement agent. The lithium ion secondary battery prepared in Comparative Example 1 has lithium efficiency, capacity retention, and cycle life similar to that of Comparative Example 1. The technician analyzed the reason, which may be that no insulating layer is formed in the negative electrode plate, there is an electron path between the lithium supplement agent and the negative active material, and the lithium supplement agent is prone to corrosion reaction, which reduces the lithium supplement efficiency.

Further, comparative Examples 3 and 4 differ from Embodiments 1 to 9 mainly in that the mass ratio of the insulating material dissolved in the electrolyte in Comparative Examples 3 and 4 does not range from 0.1% to 4%, and the lithium efficiency, capacity retention, and cycle life of the lithium ion secondary batteries prepared in Comparative Examples 3 and 4 are greatly different from Embodiments 1 to 9. The technician analyzed the reason, which may be that when the mass ratio of the insulating material dissolved in the electrolyte is smaller than the range of 0.1% to 4%, the electron path of the lithium supplement agent and the negative active material cannot be effectively blocked; when the mass ratio of the insulating material dissolved in the electrolyte is greater than the range of 0.1% to 4%, the viscosity and conductivity of the electrolyte may be affected after the injection of the electrolyte.

It should be noted that the present disclosure is not limited to the above-mentioned embodiments. The above-mentioned embodiments are merely examples, and within the scope of the technical solution of the present disclosure, embodiments having substantially the same constitution as the technical idea and exerting the same function and effect are all included within the scope of the present disclosure. In addition, various modifications may be made to the embodiments by those skilled in the art without departing from the spirit of the present disclosure, and other embodiments that are constructed by combining some of the constituent elements of the embodiments are also included in the scope of the present disclosure.

## Claims

1. A secondary battery, comprising:

   a negative electrode plate comprising a negative active material and a lithium supplement agent; and
   an electrolyte, an insulating material being dissolved in the electrolyte, a mass ratio of the insulating material in the electrolyte ranging from 0.1% to 4%, the insulating material being derived from the negative electrode plate prior to injection of the electrolyte and arranged between the negative active material and the lithium supplement agent in the negative electrode plate prior to the injection of the electrolyte.

2. The secondary battery according to claim 1, wherein the mass ratio of the insulating material in the electrolyte ranges from 2% to 4%, and
   optionally, the mass ratio of the insulating material in the electrolyte is 4%.

3. The secondary battery according to claim 1 or 2, wherein the insulating material has an electronic conductivity smaller than $10^{-6}$ S/m at a temperature of 25°C.

4. The secondary battery according to any one of claims 1 to 3, wherein the insulating material satisfies at least one of the following conditions (1) to (3):

   (1) the insulating material has an ionic conductivity smaller than $10^{-3}$ S/m at a temperature of 25°C;
   (2) a solubility of the insulating material in the electrolyte is greater than 4 g at a temperature of -20°C;
   (3) the insulating material is in a solid state at the temperature of 25°C.

5. The secondary battery according to any one of claims 1 to 4, wherein the insulating material comprises at least one of polymethyl methacrylate, a block copolymer of polymethyl methacrylate-propylene sulfite, polyethylene oxide, polyacrylonitrile, polystyrene, ethylene carbonate, propylene sulfate, ethylene sulfate, lithium bis(oxalate)borate, and lithium difluorophosphate.

6. The secondary battery according to any one of claims 1 to 5, wherein the insulating material comprises polymethyl methacrylate and ethylene carbonate, and
optionally, a mass ratio of polymethyl methacrylate to ethylene carbonate is (0.5~1.5): 1.

7. The secondary battery according to any one of claims 1 to 6, wherein the negative electrode plate comprises:

   a negative current collector;
   a negative active material layer located on at least one surface of the negative current collector, and containing the negative active material; and
   a lithium supplement layer located on a surface of the negative active material layer facing away from the negative negative current collector, the lithium supplement layer containing the lithium supplement agent, and the insulating material being arranged between the negative active material and the lithium supplement layer.

8. The secondary battery according to claim 7, wherein the negative electrode plate further comprises an insulating layer arranged between the negative active material and the lithium supplement layer, the insulating layer containing the insulating material.

9. The secondary battery according to claim 7 or 8, wherein a surface of at least part of the negative active material in the negative active material layer is at least partially coated with the insulating material.

10. A preparation method of the secondary battery according to any one of claims 1 to 8, comprising:

    forming a negative electrode slurry;
    forming the negative active material layer by applying the negative electrode slurry on at least one surface of a negative current collector;
    forming an insulating material solution by mixing the insulating material with a solvent;
    forming an insulating layer by applying the insulating material solution on a surface of the negative active material layer facing away from the negative current collector;
    forming the lithium supplement layer on a surface of the insulating layer facing away from the negative active material layer to prepare the negative electrode plate;
    laminating the negative electrode plate and the positive electrode plate; and
    injecting the electrolyte between the negative electrode plate and the positive electrode plate that are laminated.

11. The preparation method of the secondary battery according to claim 10, wherein the solvent may comprise one or more of dimethyl carbonate, diethyl carbonate, ethyl methyl carbonate, 1,3-dioxolane, diphenyl carbonate, propene sultone, propenyl-1,3-sultone, triphenyl phosphate, triphenyl phosphite, and sulfolane.

12. A preparation method of the secondary battery according to any one of claims 1 to 7 and 9, comprising:

    forming a negative electrode slurry, the negative electrode slurry comprising the negative active material, a surface of at least part of the negative active material being at least partially coated with an insulating material;
    forming a negative active material layer by applying the negative electrode slurry on at least one surface of a negative current collector;
    forming the lithium supplement layer on a surface of the negative active material layer facing from the negative current collector to prepare the negative electrode plate;
    laminating the negative electrode plate and the positive electrode plate;
    injecting the electrolyte between the negative electrode plate and the positive electrode plate that are laminated.

13. An electric device, comprising the secondary battery according to any one of claims 1 to 9, a secondary battery prepared by the preparation method of the secondary battery according to any one of claims 10 to 11, or a secondary battery prepared by the preparation method of the secondary battery according to claim 12.

4

**FIG. 1**

4

43

42

42

41

FIG. 2

FIG. 3

FIG. 4

## INTERNATIONAL SEARCH REPORT

| International application No. |
|---|
| **PCT/CN2022/108863** |

**A. CLASSIFICATION OF SUBJECT MATTER**

H01M 10/058(2010.01)i; H01M 4/13(2010.01)i

According to International Patent Classification (IPC) or to both national classification and IPC

**B. FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNPAT, CNKI, WPI, EPODOC: 电池, 负极, 阳极, 绝缘, 补锂, 涂, 覆, 聚甲基丙烯酸甲酯, 聚丙烯腈, 聚苯乙烯, 碳酸乙烯酯, 聚氧化乙烯, battery, negative, electrode, anode, insulat+, lithium, complementary, coat+, layer, film, polymethyl, methacrylate, acrylonitrile, polystyrene, ethylene, carbonate, polyethylene, oxidethylene, carbonate

**C. DOCUMENTS CONSIDERED TO BE RELEVANT**

| Category* | Citation of document, with indication, where appropriate, of the relevant passages | Relevant to claim No. |
|---|---|---|
| X | CN 111261948 A (BEIJING HAWAGA POWER STORAGE TECHNOLOGY COMPANY LTD.) 09 June 2020 (2020-06-09) description, paragraphs 0003-0115 | 1-13 |
| Y | CN 111261948 A (BEIJING HAWAGA POWER STORAGE TECHNOLOGY COMPANY LTD.) 09 June 2020 (2020-06-09) description, paragraphs 0003-0115 | 9,12 |
| Y | CN 102934262 A (NISSAN MOTOR CO., LTD.) 13 February 2013 (2013-02-13) claims 1-20, and description, paragraphs 0025-0041 and 0069-0103 | 9,12 |
| A | CN 111740153 A (QINGTAO (KUNSHAN) ENERGY DEVELOPMENT CO., LTD.) 02 October 2020 (2020-10-02) entire document | 1-13 |
| A | CN 114566610 A (EVE ENERGY CO., LTD.) 31 May 2022 (2022-05-31) entire document | 1-13 |
| A | JP 2016069388 A (SANYO CHEMICAL INDUSTRIES, LTD.) 09 May 2016 (2016-05-09) entire document | 1-13 |

☐ Further documents are listed in the continuation of Box C.   ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **02 December 2022** | **16 December 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2022/108863**

| Patent document cited in search report | | | Publication date (day/month/year) | Patent family member(s) | | | Publication date (day/month/year) |
|---|---|---|---|---|---|---|---|
| CN | 111261948 | A | 09 June 2020 | CN | 111261948 | B | 15 June 2021 |
| CN | 102934262 | A | 13 February 2013 | MX | 328123 | B | 26 February 2015 |
| | | | | JP | 2012015099 | A | 19 January 2012 |
| | | | | RU | 2012156168 | A | 20 July 2014 |
| | | | | KR | 20130042505 | A | 26 April 2013 |
| | | | | US | 2013071741 | A1 | 21 March 2013 |
| | | | | WO | 2011152263 | A1 | 08 December 2011 |
| | | | | BR | 112012031369 | A2 | 16 November 2016 |
| | | | | CN | 107425174 | A | 01 December 2017 |
| | | | | EP | 2579363 | A1 | 10 April 2013 |
| | | | | TW | 201214846 | A | 01 April 2012 |
| | | | | MX | 2012013943 | A | 24 January 2013 |
| | | | | RU | 2531558 | C2 | 20 October 2014 |
| | | | | IN | 201204163 | P2 | 17 April 2015 |
| | | | | JP | 5961922 | B2 | 03 August 2016 |
| | | | | US | 9666858 | B2 | 30 May 2017 |
| | | | | EP | 2579363 | B1 | 06 September 2017 |
| CN | 111740153 | A | 02 October 2020 | None | | | |
| CN | 114566610 | A | 31 May 2022 | None | | | |
| JP | 2016069388 | A | 09 May 2016 | None | | | |

Form PCT/ISA/210 (patent family annex) (January 2015)